# EUROPEAN PATENT APPLICATION

(11) **EP 4 039 099 A1**
(43) Date of publication of application: **10.08.2022**
(21) Application number: 20872848.5
(22) Date of filing: 25.09.2020
(51) Int. Cl.: A23F 3/30, A23L 29/00, A23L 2/00, A23L 2/39, A23L 2/56

(54) **SOLID COMPOSITION HAVING GREEN LAVER SCENT**

(30) Priority: 30.09.2019 JP 2019180686
(71) Applicant: Suntory Holdings Limited, Osaka 530-8203 (JP)
(72) Inventor: NAKAJIMA, Takeshi, Soraku-gun, Kyoto 619-0284 (JP); KIKUCHI, Keita, Soraku-gun, Kyoto 619-0284 (JP); YONEZAWA, Daisaku, Kawasaki-shi, Kanagawa 211-0067 (JP); HIRAYAMA, Yuji, Kawasaki-shi, Kanagawa 211-0067 (JP); OSANAI, Taisuke, Kawasaki-shi, Kanagawa 211-0067 (JP)
(74) Representative: Vossius & Partner Patentanwälte Rechtsanwälte mbB
(86) International application number: PCT/JP2020/036271
(87) International publication number: WO 2021/065717

(57) **Abstract**

An object of the present invention is to provide a solid composition that provides green laver aroma and makes one feel its aroma in a sustained way when added to a medium such as water.

The solid composition comprises dimethyl sulfide and β-ionone, and has a weight ratio of β-ionone content to dimethyl sulfide content which is adjusted to be in the range of from 0.003 to 3.

## Description

### TECHNICAL FIELD

The present invention relates to a solid composition, and more particularly to a solid composition that provides green laver aroma.

### BACKGROUND ART

Tea beverages produced from processed tea leaves are widely consumed not only in Japan but also in other countries throughout the world. Some tea beverages are sold in the form of packaged beverages which are beverages sterile packed in packages such as PET bottles or cans, or other tea beverages are sold in the form of tea powders which are made by drying and powdering tea into a powdery form and are intended to be consumed while dissolved in cold or hot water, or the like. Powdery teas that are to be drunk with water or hot water are broadly classified into the following two forms: one being instant teas obtained by drying a liquid tea leaf extract, and the other being powdered teas obtained by pulverizing tea leaves as they are.

With regard to instant teas, various techniques intended to improve tea flavor have been disclosed. For example, the following instant teas have been disclosed: an instant tea obtained by performing extraction of the same tea leaves multiple times repeatedly during the process of preparing a liquid tea leaf extract (PTL 1); and an instant tea characterized in that a caffeine content is reduced by purifying a green tea extract with a mixed solution comprising ethanol and water at a specified ratio (PTL 2). Also disclosed is an instant tea prepared using a monosaccharide or disaccharide such as glucose or maltose for the purpose of preventing a loss of flavor over time (PTL 3). With regard to powdered teas, various techniques intended to improve dispersity or solubility in water have been disclosed -- for example: a powdered tea obtained by dispersing a pulverized product of tea leaves in a liquid vegetable extract and then spray-drying the obtained dispersion (PTL 4); and a powdered tea mainly composed of pulverized tea leaves obtained by pulverizing and atomizing tea leaves in an aqueous solution (PTL 5).

### CITATION LIST

### PATENT LITERATURES

PTL 1: Japanese Unexamined Patent Application Publication No. JP 2013-226111
PTL 2: Japanese Unexamined Patent Application Publication No. JP 2009-72188
PTL 3: Japanese Unexamined Patent Application Publication No. JP 2013-153739
PTL 4: Japanese Unexamined Patent Application Publication No. JP 2010-233559
PTL 5: Japanese Unexamined Patent Application Publication No. JP 2007-289115

### SUMMARY OF INVENTION

### TECHNICAL PROBLEM

Tea beverages, *inter alia* high-grade green tea beverages, have characteristic aromas -- one of those characteristic aromas is called "green laver aroma". While various types of solid tea compositions have been developed and sold, there has been no known solid tea composition that provides excellent aroma, in particular excellent green laver aroma. Therefore, an object of the present invention is to provide a solid composition that provides green laver aroma and makes one feel its aroma in a sustained way when added to a medium such as water.

### SOLUTION TO PROBLEM

The present inventors have made intensive studies to achieve the aforementioned object, and as a result found that while it has conventionally been known that dimethyl sulfide has green laver aroma, further incorporating β-ionone in combination with dimethyl sulfide yields a composition that makes one feel green laver aroma characteristic of high-grade tea in a significant way. Further, the inventors found that when the ratio of dimethyl sulfide content to β-ionone content is adjusted to be within a specified range, the composition can make one feel green laver aroma characteristic of high-grade tea in a sustained way. Based on these findings, the inventors have completed the present invention.

The present invention is directed, but not limited, to the following.
(1) A solid composition comprising dimethyl sulfide and β-ionone, and having a weight ratio of β-ionone content to dimethyl sulfide content of from 0.003 to 3.
(2) The composition as set forth in (1), wherein the composition is a powder composition.
(3) The composition as set forth in (1) or (2), comprising two or more types of dextrins.
(4) The composition as set forth in (3), comprising a linear dextrin and a cyclic dextrin.
(5) The composition as set forth in any of (1) to (4), further comprising at least one aroma component selected from the group consisting of α-ionone, β-cyclocitral, (z)-3-hexenol, 1-penten-3-ol, hexanal, and nerolidol.
(6) The composition as set forth in any of (1) to (5), comprising a tea leaf extract.
(7) The composition as set forth in any of (1) to (6), wherein the tea leaf extract is a *Sencha* tea leaf extract.
(8) A beverage or food comprising the composition as set forth in any one of (1) to (7).
(9) The beverage or food as set forth in (8), wherein the beverage or food is a beverage.
(10) The beverage or food as set forth in (9), wherein the beverage or food is a tea beverage.

### ADVANTAGEOUS EFFECTS OF INVENTION

According to the present invention, there can be provided a solid composition that provides green laver aroma and makes one feel its aroma in a sustained way when added to a medium such as water. The solid composition of this invention can be made with water or hot water into a tea beverage, and the thus-obtained tea beverage can provide green laver aroma characteristic of high-grade tea at the time of drinking. The solid composition of this invention is extremely lighter in weight than tea beverages and thus is excellent in convenience during transportation.

Also, the solid composition of the present invention can be used as a source material to make foods. In recent years, there has been a tendency toward an increase in the number and types of tea flavored foods. By using the solid composition of this invention, green laver aroma characteristic of high-grade tea can be imparted to, for example, confectionary foods, such as cakes, sponge cakes, candies, cookies, jellies, puddings and chocolates.

### DESCRIPTION OF EMBODIMENTS

Hereunder, the solid composition of the present invention will be described. **Unless otherwise specified, the terms** "ppm", **"ppb" and "wt.%" as used herein refer** respectively to ppm, ppb, and wt.% on a weight/weight (w/w) basis.

One embodiment of the present invention is directed to a solid composition comprising dimethyl sulfide **and β**-ionone, and having a weight ratio of **β**-ionone content to dimethyl sulfide content of from 0.003 to 3. By adopting the aforementioned composition profile, the solid composition can exhibit green laver aroma and make one feel its aroma in a sustained way. As referred to herein, the term "green laver **aroma" refers to an aroma that** combines a faint roasted aroma with a sweet scent and the smell of seashore.

### (Tea leaf extract)

The solid composition of the present invention can comprise a tea leaf extract. As referred to herein, the term **"tea leaf extract"** refers to components extracted from tea leaves. The tea leaves that can be used in the present invention are leaves obtained from plants belonging to the family *Theaceae,* genus *Camella* (*e.g., Camellia sinensis* (L) O. Kuntze). The tea leaves used in this invention can be classified into non-fermented tea leaves, semi-fermented tea leaves, and fermented tea leaves depending on the method of processing. Examples of non-fermented tea leaves include, but are not limited to, green tea leaves, such as *Aracha* (crude tea), *Sencha* (brewed green tea), *Gyokuro* (refined green tea), *Kabuse-cha* (shaded green tea), *Tencha* (non-ground tea leaves used for *Matcha*), *Bancha* (coarse green tea), *Houji-cha* (roasted green tea), *Kamairi-cha* (pot-roasted green tea), *Kukicha* (twig tea), *Bocha* (roasted twig tea), and *Mecha* (bud tea). Examples of semi-fermented tea leaves include, but are not limited to, oolong tea leaves, such as Tieguanyin (*Tekkanon*)*,* Sezhong (*Shikishu*)*,* Huangjin Gui (*Ougonkei*)*,* and Wuyi tea (*Buigan* tea). Examples of fermented tea leaves include, but are not limited to, black tea leaves, such as Darjeeling, Assam, and Sri Lanka. In this invention, one type of tea leaves may be used alone, or two or more types of tea leaves may be used in a blended form. Any parts of plants, such as leaves and stems, can be used, as appropriate, to make tea without particular limitation as long as they are plant parts from which fragrance components can be extracted. Tea leaves can be used in any shapes, without limitation, such as whole or powdered leaf. The tea leaf extract used in this invention is not particularly limited, but a green tea leaf extract is preferably used, with a *Sencha* tea leaf extract being more preferably used.

The content of a tea leaf extract in the solid composition of the present invention is not particularly limited, and is in the range of, for example, from 30 to 90 wt.%, preferably from 35 to 80 wt.%, more preferably from 40 to 70 wt.%. When the content of a tea leaf extract falls within the aforementioned range, the aroma derived from tea leaves can be fully felt.

### (Dimethyl sulfide and β-ionone)

The solid composition of the present invention comprises dimethyl sulfide and β-ionone. Dimethyl sulfide is an organic sulfur compound represented by the structural formula (CH₃)₂S, and is known as a laver aroma component. β-Ionone is one of the three isomers of ionones, a subclass of terpenoid compounds, which differ in double-bond location, and is known to smell like violet flowers or cedarwood oil.

In the solid composition of the present invention, the weight ratio of **β**-ionone content to dimethyl sulfide content (**β**-ionone content/dimethyl sulfide content) is in the range of from 0.003 to 3. While, as mentioned above, dimethyl sulfide is known as an aroma component having green laver aroma, the use of dimethyl sulfide alone puts too strong an emphasis on the roasted green laver aroma felt as a top note, so that the excellent green laver aroma of high-grade green tea beverages like *Gyokuro* is difficult to achieve. However, combined use of β-ionone with dimethyl sulfide at the aforementioned weight ratio gives a gorgeous sweet aroma as felt as a last note of high-grade tea beverages like *Gyokuro,* thereby yielding a composition that makes one feel a profound green laver aroma with an excellent balance of fragrance notes. Also, by having a good balance of fragrance notes, the composition can make one feel a good aroma of green laver from the top note to the last note in a sustained way.

The weight ratio of β-ionone content to dimethyl sulfide content in the solid composition of the present invention is preferably not less than 0.005, not less than 0.01, not less than 0.015, not less than 0.02, not less than 0.025, not less than 0.03, not less than 0.035, not less than 0.04, not less than 0.045, or not less than 0.050. Also, the weight ratio of β-ionone content to dimethyl sulfide content in the solid composition of this invention is preferably not more than 2.5, not more than 2.0, not more than 1.5, not more than 1.0, not more than 0.8, not more than 0.6, not more than 0.5, not more than 0.45, or not more than 0.4. Typically, the weight ratio of **β**-ionone content to dimethyl sulfide content in the solid composition of this invention is in the range of preferably from 0.005 to 2, more preferably from 0.015 to 1, still more preferably from 0.02 to 0.5.

The dimethyl sulfide content in the solid composition of the present invention is not particularly limited, and is for example not less than 0.001 ppm, preferably not less than 0.002 ppm, not less than 0.005 ppm, not less than 0.01 ppm, not less than 0.012 ppm, not less than 0.015 ppm, or not less than 0.02 ppm. When the dimethyl sulfide content falls within the aforementioned range, the solid composition can exhibit green laver aroma. The upper limit of the dimethyl sulfide content in the solid composition of this invention is not particularly limited. For example, the dimethyl sulfide content is not more than 20,000 ppm, preferably not more than 10,000 ppm, not more than 5,000 ppm, not more than 1,000 ppm, not more than 500 ppm, not more than 200 ppm, or not more than 150 ppm. Thus, the dimethyl sulfide content in the solid composition of this invention is typically in the range of from 0.001 ppm to 10000 ppm, preferably from 0.005 ppm to 500 ppm, more preferably from 0.012 ppm to 200 ppm, still more preferably from 0.02 ppm to 150 ppm.

The β-ionone content in the solid composition of the present invention is not particularly limited, and is for example not less than 0.001 ppm, preferably not less than 0.002 ppm, not less than 0.003 ppm, not less than 0.004 ppm, not less than 0.005 ppm, or not less than 0.006 ppm. When **β**-ionone is present at a concentration within the aforementioned range in combination with dimethyl sulfide, the solid composition of this invention can exhibit a well-balanced and more excellent aroma of green laver. The upper limit of the **β**-ionone content in the solid composition of this invention is not particularly limited. For example, the **β**-ionone content is not more than 10000 ppm, preferably not more than 5000 ppm, not more than 1000 ppm, not more than 500 ppm, not more than 200 ppm, or not more than 100 ppm. Thus, the β-ionone content in the solid composition of this invention is typically in the range of from 0.001 ppm to 10000 ppm, preferably from 0.002 ppm to 500 ppm, more preferably from 0.005 ppm to 200 ppm, still more preferably from 0.006 ppm to 100 ppm.

In the present invention, the contents of dimethyl sulfide and β-ionone in the solid composition can be measured using gas chromatography (GC). As a gas chromatographic analysis system, Flash GC Nose HERACLES II (produced by Alpha M.O.S. Japan K.K.) can be used. To be specific, by using a solution prepared by dissolving the solid composition of this invention in water, the contents of the above aroma components can be measured under the conditions detailed below.

| | |
|---|---|
| Gas chromatography system: | Flash GC Nose HERACLES II |
| Column 1: MXT-5 | (slight polarity, 10 m, 180 µm ID, 0.4 µm) |
| Column 2: MXT-WAX | (high polarity, 10 m, 180 µm ID, 0.4 µm) |
| Carrier gas flow rate: | hydrogen 1.6 mL/min. |
| Flame ionization detector (FID) temperature: | 260°C |
| Injector temperature: | 200°C |
| Oven temperature: | 40°C (5 sec.), then raised at 1.5°C/sec. to 250°C (90 sec.) |
| Injection time: | 125 sec. |
| Trap temperature: | 50°C for adsorption, 240°C for desorption |
| Trap time: | 130 sec. for adsorption, 35 sec. for preheating |

The conditions for measurement samples can be set as detailed later in the Examples section. After the contents of aroma components in a solution are measured, the contents of aroma components in the solid composition can be determined by back calculation from the amount of the solid composition dissolved in water.

### (Dextrin)

The solid composition of the present invention can comprise a dextrin. The term **"dextrin" is a generic term for carbohydrates produced by the hydrolysis of starch or** glycogen. In this invention, the dextrin can be used as an excipient to form a solid composition. The type of a dextrin used in the solid composition of this invention is not particularly limited, and at least one type, at least two types, at least three types, or at least four types of dextrins can be used, with preferably at least two types, more preferably at least three types, of dextrins being used.

The dextrin content in the solid composition of the present invention is not particularly limited, and the total dextrin content is in the range of, for example, from 10 to 70 wt.%, preferably from 20 to 65 wt.%, more preferably from 30 to 60 wt.%. In this invention, a commercially available dextrin product can be used. The dextrin content in the solid composition can be measured by sugar analysis using a method known to skilled artisans.

The type of a dextrin used in the present invention is not particularly limited, and examples thereof include, but are not limited, a linear dextrin, a cyclic dextrin, and a spiral dextrin. As referred to herein, the term "linear dextrin" refers to a dextrin that is composed of glucoses linked in a straight chain form or in the form of chains with branches and which does not form a ring structure or a spiral structure. Also, as referred to herein, the term **"cyclic dextrin" refers to a dextrin that is composed of glucoses linked to form a cyclic** structure and which does not form a spiral structure. **As referred to herein, the term "spiral dextrin" refers to a dextrin composed of glucoses** linked to form a spiral structure. The solid composition of this invention preferably comprises a linear dextrin and a cyclic dextrin.

The type of the linear dextrin is not particularly limited, and examples thereof that can be used include linear dextrins with a DE (dextrose equivalent) of from 1 to 25, and linear dextrins with a weight average molecular weight of from 500 to 160,000. In the present invention, one type of linear dextrin may be used alone, or two or more types thereof may be used in combination. In a preferred embodiment of this invention, two types of linear dextrins are used. For example, in the case of using two types of linear dextrins, a combination of a linear dextrin with a DE of from 2 to 5 and a linear dextrin with a DE of from 16 to 20, or a combination of a linear dextrin with a weight average molecular weight of from 90,000 to 140,000 and a linear dextrin with a weight average molecular weight of from 600 to 1,200, can be used.

In the case of using a linear dextrin(s), the content of the linear dextrin(s) in the solid composition of the present invention is in the range of, for example, from 0 to 65 wt.%, preferably from 10 to 60 wt.%, more preferably from 15 to 55 wt.%. When the two types of linear dextrins to be used are a linear dextrin with a DE of from 2 to 5 and a linear dextrin with a DE of from 16 to 20, the content of the linear dextrin with a DE of from 2 to 5 in the solid composition of this invention is in the range of, for example, from 0 to 60 wt.%, preferably from 5 to 50 wt.%, more preferably from 10 to 45 wt.%, and the content of the linear dextrin with a DE of from 16 to 20 in the solid composition of this invention is in the range of, for example, from 0 to 60 wt.%, preferably from 5 to 50 wt.%, more preferably from 10 to 45 wt.%. The ratio (weight ratio) of the content of the linear dextrin with a DE of from 2 to 5 to that of the linear dextrin with a DE of from 16 to 20 is in the range of, for example, from 4:0.5 to 0.5:5, preferably from 3:1 to 1:5, more preferably from 2:1 to 1:4.

When the two types of linear dextrins to be used are a linear dextrin with a weight average molecular weight of from 90,000 to 140,000 and a linear dextrin with a weight average molecular weight of from 600 to 1,200, the content of the linear dextrin with a weight average molecular weight of from 90,000 to 140,000 in the solid composition of the present invention is in the range of, for example, from 0 to 65 wt.%, preferably from 10 to 60 wt.%, more preferably from 15 to 55 wt.%, and the content of the linear dextrin with a weight average molecular weight of from 600 to 1,200 is in the range of, for example, from 5 to 60 wt.%, preferably from 5 to 50 wt.%, more preferably from 10 to 45 wt.%. The ratio (weight ratio) of the content of the linear dextrin with a weight average molecular weight of from 90,000 to 140,000 to that of the linear dextrin with a weight average molecular weight of from 600 to 1,200 is in the range of, for example, from 5:1 to 1:3, preferably from 3:1 to 1:2, more preferably from 2:1 to 1:1.

Examples of the cyclic dextrin that can be used include cyclodextrins. In the present invention, α-cyclodextrin, β-cyclodextrin, and γ-cyclodextrin can all be used, with α-cyclodextrin being preferably used. The weight average molecular weight of the cyclic dextrin used in this invention is not particularly limited, and is in the range of, for example, from 700 to 1,300, preferably from 800 to 1,200, more preferably from 900 to 1,100. In the case of using a cyclic dextrin, the content of the cyclic dextrin in the solid composition of this invention is in the range of, for example, from 0.5 to 15 wt.%, preferably from 1 to 12 wt.%, more preferably from 3 to 10 wt.%.

In the case of using a linear dextrin and a cyclic dextrin in combination, the ratio (weight ratio) of the content of the linear dextrin to that of the cyclic dextrin is in the range of, for example, from 20:1 to 2:1, preferably from 15:1 to 3:1, more preferably from 12:1 to 5:1.

The solid composition of the present invention may comprise a spiral dextrin. The DE value of the spiral dextrin used in this invention is not particularly limited and is, for example, less than 7, preferably less than 6, more preferably less than 5. Examples of the spiral dextrin that can be used include Cluster Dextrin (produced by Ezaki Glico Co., Ltd.). In the case of using a spiral dextrin, the content of the spiral dextrin in the solid composition of the present invention is in the range of, for example, from 0 to 45 wt.%, preferably from 5 to 30 wt.%, more preferably from 10 to 20 wt.%. Further, in the case of using a spiral dextrin, the ratio (weight ratio) of the content of a linear dextrin to that of a spiral dextrin is in the range of, for example, from 1:3 to 3:1, preferably from 1:2 to 2:1, more preferably from 1:1.5 to 1.5:1.

### (Other aroma components)

The solid composition of the present invention can further comprise, in addition to dimethyl sulfide and β-ionone as mentioned above, at least one aroma component selected from the group consisting of α-ionone, β-cyclocitral, (z)-3-hexenol, 1-penten-3-ol, hexanal, and nerolidol. When such aroma components are incorporated in the solid composition of this invention, the solid composition can exhibit a more well-balanced aroma of green laver.

The α-ionone content in the solid composition of the present invention is, for example, not more than 10,000 ppb, preferably not more than 5,000 ppb, more preferably not more than 2,000 ppb. The β-cyclocitral content in the solid composition of this invention is, for example, not more than 10,000 ppb, preferably not more than 5,000 ppb, more preferably not more than 2,000 ppb. The (z)-3-hexenol content in the solid composition of this invention is in the range of, for example, from 1 to 20,000 ppb, preferably from 2 to 15,000 ppb, more preferably from 3 to 10,000 ppb. The 1-penten-3-ol content in the solid composition of this invention is in the range of, for example, from 10 to 10,000 ppb, preferably from 15 to 8,000 ppb, more preferably from 20 to 7,000 ppb. The hexanal content in the solid composition of this invention is in the range of, for example, from 1 to 10,000 ppb, preferably from 2 to 5,000 ppb, more preferably from 5 to 2,000 ppb. The nerolidol content in the solid composition of this invention is in the range of, for example, from 1 to 10,000 ppb, preferably from 2 to 5,000 ppb, more preferably from 5 to 2,000 ppb.

In the present invention, **the contents of α**-ionone, **β**-cyclocitral, (z)-3-hexenol, 1-penten-3-ol, hexanal, and nerolidol in the solid composition can be measured using gas chromatography/mass spectroscopy (GC/MS). To be specific, the contents of the above aroma components can be measured under the conditions detailed below.
System:

| | |
|---|---|
| GC: | GC7890B, produced by Agilent Technologies |
| MS: | 5977A, produced by Agilent Technologies |
| HS: | MPS, produced by Gestel |
| Tube: | Tenax TA, Carbon bx1000 |
| Column: | HP-INNOWAX, 60 m × 0.25 mm i.d., df = 0.25 µm |
| Temperature conditions: | 40°C (4 min.), then raised at 5°C/min. to 260°C |
| Carrier gas flow rate: | He 1.5 mL/min. |
| Injection method: | Splitless |
| Ion source temperature: | 260°C |

The conditions for measurement samples can be set as detailed later in the Examples section.

### (Extract containing dimethyl sulfide and β-ionone)

In the solid composition of the present invention, dimethyl sulfide and β-ionone may be used as respective purified products or respective crude purified products, or may be used in the form of an extract containing dimethyl sulfide and β-ionone. As the extract containing dimethyl sulfide and β-ionone, a naturally occurring extract can be used, and a vegetable extract or an animal extract can be used. In this invention, a vegetable extract is preferably used, and in particular, a tea leaf extract is more preferably used. Although the type of the extract containing dimethyl sulfide and β-ionone is not particularly limited, the extract is preferably of a different type from the tea leaf extract described above. In other words, when the aforementioned tea leaf extract is regarded as a first tea leaf extract, the tea leaf extract containing dimethyl sulfide and β-ionone can be used as a second tea leaf extract different from the first tea leaf extract. Additionally, in this invention, dimethyl sulfide and β-ionone may be derived from the first tea leaf extract. In this invention, the contents of dimethyl sulfide and β-ionone, regardless of their origin, mean the amounts of these components contained in the solid composition of this invention.

The tea leaves used as a source material to make a tea leaf extract containing dimethyl sulfide and β-ionone are preferably non-fermented tea leaves, and specific examples thereof include green tea leaves, such as *Aracha, Sencha, Gyokuro, Kabuse-cha, Tencha*, *Bancha*, and *Houji-cha.* The tea leaf extract containing dimethyl sulfide and β-ionone may be an extract from a single type of tea leaves or may be an extract from a blend of two or more types of tea leaves. In this invention, the tea leaf extract containing dimethyl sulfide and β-ionone is preferably a green tea leaf extract, more preferably an extract from tea leaves grown by shielding the sunlight before picking up, such as *Kabuse-cha, Gyokuro* or *Tencha.* By using tea leaves grown by shielding the sunlight before picking up, such as *Kabuse-cha, Gyokuro* or *Tencha*, not only dimethyl sulfide and β-ionone but also other aroma components derived from such tea leaves can be contained in the tea leaf extract, which can impart more excellent aroma characteristic of high-grade green tea to the solid composition.

In the case of using a tea leaf extract containing dimethyl sulfide and β-ionone, the content of the tea leaf extract is not particularly limited, and can be adjusted such that the contents of dimethyl sulfide and β-ionone in the solid composition of the present invention fall within the aforementioned ranges.

### (Other additives)

The solid composition of the present invention not only comprises the aforementioned components, but also can have added thereto other additives commonly used in beverages and foods, such as antioxidant, preservative, pH adjustor, sweetener, enrichment, thickening stabilizer, emulsifier, dietary fiber, and quality stabilizer, to the extent that such additives do not impair the effects of this invention.

### (Solid composition)

The form of the solid composition of the present invention is not particularly limited, and the solid composition of this invention is preferably in a powder form, or namely a powder composition. In this invention, the powder composition has only to be in the form of powder, including granules. In this invention, the particle size of the powder composition is not particularly limited, and is in the range of, for example, from 0.1 to 500 µm, preferably from **1 to 300 µm, more** preferably from **10 to 200 µm.**

The solid composition of the present invention can be incorporated in a beverage or food. In other words, this invention can provide a beverage or food comprising the aforementioned solid composition. The solid composition of this invention is preferably incorporated in a liquid to prepare a beverage, and most preferably consumed in the form of a tea beverage prepared by dissolving the solid composition in water, hot water or the like. From this viewpoint, the solid composition of this invention can be provided as an instant tea. **As referred to herein, the term "instant tea" refers to a powder beverage** prepared by drying and powdering a solution of a liquid tea leaf extract used as a source material. Examples of tea beverages include non-fermented teas (*e.g.,* green tea), semi-fermented teas (*e.g.,* oolong tea), and fermented teas (*e.g.,* black tea). Specific examples thereof include: steamed, non-fermented teas (green teas), such as *Sencha, Bancha*, *Houji-cha*, *Gyokuro, Kabuse-cha,* and *Tencha*; non-fermented teas including *Kamairi-cha* such as *Ureshinocha, Aoyagicha,* and different Chinese teas; semi-fermented teas such as *Hoshucha*, *Tekkanon* tea, and oolong tea; and fermented teas such as black tea, *Awa-bancha*, and puerh tea. The tea beverage in which the solid composition of this invention is used is preferably a green tea. In other words, the solid composition of this invention can be provided as an instant green tea.

When the solid composition of the present invention is incorporated in a liquid such as water or hot water, the content of the solid composition in a solution is not particularly limited, and is in the range of, for example, from 0.01 to 20 wt.%, preferably from 0.05 to 10 wt.%, more preferably from 0.1 to 5.0 wt.%. Also, the content of the solid composition in a solution may be adjusted so as to ensure, for example, that the dimethyl sulfide content in the solution falls within the range of from 1 to 2500 ppb, preferably from 5 to 2000 ppb, more preferably from 10 to 1000 ppb, still more preferably from 100 to 500 ppb, or that the β-ionone content in the solution falls within the range of from 0.05 to 100 ppb, preferably from 0.2 to 80 ppb, more preferably from 0.4 to 60 ppb, still more preferably from 4 to 40 ppb.

The solid composition of the present invention can also be added to a food. Examples of foods include confectionary foods, such as cakes, sponge cakes, candies, cookies, jellies, puddings, and chocolates, frozen desserts such as ice cream, ice candy, and sherbet; and snacks, regardless of whether they are Japanese or Western confectionaries. Also, the solid composition of this invention can be used in breads or dairy products. When the solid composition of the present invention is added to a food, the amount of the solid composition added can be determined, as appropriate, depending on, for example, the type of the food.

When the solid composition of the present invention is added to a food, the amount of the solid composition added can be determined, as appropriate, depending on, for example, the type of the food. The solid composition of this invention can be added to a food so as to ensure that the content of the solid composition in the food falls within the range of, for example, from 0.01 to 20 wt.%, preferably from 0.05 to 10 wt.%, more preferably from 0.1 to 5.0 wt.%, still more preferably from 0.5 to 5.0 wt.%.

Also, the amount of the solid composition of the present invention added to a food can be determined using the content(s) of dimethyl sulfide and/or β-ionone as an index. For example, the solid composition of this invention can be added to a food so as to ensure that the dimethyl sulfide content in the food falls within the range of from 1 to 2500 ppb, preferably from 5 to 2000 ppb, more preferably from 10 to 1000 ppb, still more preferably from 100 to 500 ppb. For example, the solid composition of this invention can be added to a food so as to ensure that the β-ionone content in the food falls within the range of from 0.05 to 100 ppb, preferably from 0.2 to 80 ppb, more preferably from 0.4 to 60 ppb, still more preferably from 4 to 40 ppb.

### (Production method)

The solid composition of the present invention can be produced through the steps of (A) preparing a solution comprising a tea leaf extract, dimethyl sulfide and β-ionone, and having a weight ratio of β-ionone content to dimethyl sulfide content of from 0.003 to 3, and (B) drying the prepared solution. Said solution not only comprises a tea leaf extract, dimethyl sulfide and β-ionone, but also may contain a dextrin and/or other additives as mentioned above. The amounts of any of these components to be added can be determined, as appropriate, to the extent that such components do not impair the effects of this invention. The order of adding such components is not particularly limited. As a solvent for preparing the solution, water may be used or a liquid tea leaf extract may be used as it is.

The solution can be dried using a method conventionally known to skilled artisans. Examples of drying methods include spray-drying, freeze drying, hot-air drying, and vacuum drying, with spray-drying being preferably used in the present invention. The conditions for spray-drying, such as drying temperature and time, are not particularly limited, and can be adjusted as appropriate.

The process of producing the solid composition of the present invention not only comprises the aforementioned steps, but also may comprise a step of concentrating the solution obtained at step (A), a step of sterilizing the solution obtained at step (A), and/or the like. All of these additional steps can be performed using a method conventionally known to skilled artisans.

With regard to dimethyl sulfide and β-ionone as used at step (A), a tea leaf extract (second tea leaf extract) containing these components as mentioned above may be used. By mixing a first tea leaf extract with the second tea leaf extract, the solution at step (A) can be prepared. The tea leaf extract (second tea leaf extract) containing dimethyl sulfide and β-ionone can be prepared through taking a step of distilling tea leaves, although the step taken to prepare the second tea leaf extract is not particularly limited to the above one. The tea leaves used as a source material to make the second tea leaf extract are as described above. In this invention, tea leaves grown by shielding the sunlight before picking up, such as *Kabuse-cha, Gyokuro* or *Tencha* can be preferably used as a source material.

Distillation of tea leaves to make a tea leaf extract (second tea leaf extract) containing dimethyl sulfide and β-ionone is typically performed using a steam distillation method. Steam distillation is a method in which steam is passed through a source material (tea leaves) and aroma components distilled out together with steam are aggregated by cooling. Exemplary modes of steam distillation that can be adopted include atmospheric steam distillation, vacuum steam distillation, and gas-liquid multistage countercurrent contact distillation (spinning cone column). In this invention, atmospheric steam distillation is preferably used. Steam distillation of tea leaves is typically performed by a blow-in type steam distillation method. The blow-in type steam distillation is a method in which steam is brought into direct contact with a source material (tea leaves) placed in a container such as basket, and the steam passed through the source material is collected and cooled to obtain a distillate.

The tea leaf extract (second tea leaf extract) containing dimethyl sulfide and β-ionone as obtained by a steam distillation method can be further subjected to a concentration step to enhance the concentrations of aroma components. Concentration of the second tea leaf extract is typically performed by a distillative concentration method. The distillative concentration can be performed by, for example, employing a procedure in which the tea leaf extract is placed in a still and boiled by heating from the bottom to collect aroma components distilled out together with steam. For the distillative concentration, an atmospheric distillative concentration method or a vacuum distillative concentration method can be employed. In this invention, the vacuum distillative concentration method is preferably employed. Also, an operation called salting-out may be performed at the step of distillative concentration. By performing the salting-out treatment, water molecules can be attracted by the polarity of a salt in a distillate placed in a still, thereby promoting the vaporization of organic compounds. The salting-out treatment can be performed by incorporating a salt such as sodium chloride into a distillate to be concentrated.

The tea leaf extract (second tea leaf extract) containing dimethyl sulfide and β-ionone may be produced by taking a further step of treatment with activated carbon. By performing activated carbon treatment, the amounts of unwanted aroma components can be **reduced. As referred to herein, the term "activated carbon" refers to a porous, carbon-based** substance produced through activation of carbon-containing materials such as wood at high temperatures.

### (Method for enhancing the green laver aroma of a beverage or food)

The solid composition of the present invention as obtained in the aforementioned manner can be added to a beverage or food, so that the green laver aroma of the beverage or food can be enhanced. For this reason, in another embodiment, this invention can be directed to a method for enhancing the green laver aroma of a beverage or food, the method comprising a step of adding the solid composition obtained through the aforementioned steps to the beverage or food.

### EXAMPLES

Hereunder, the present invention will be described by way of working examples, but this invention is not limited to these examples.

### 1. Preparation of solid compositions (powder compositions)

### (1-1) Liquid tea leaf extract

A tea extraction tank was charged with 12 kg of commercial *Kabuse-cha* tea leaves, 2.5 kg of dextrin (comprising 0.375 kg of CAVAMAX W6 (a-CD), 1.063 kg of Sandek #30, and 1.063 kg of Cluster Dextrin), 0.36 kg of L-ascorbic acid, and 0.22 kg of sodium bicarbonate, and further with 120 L of hot water, and the mixture was held at 50°C for 10 minutes to prepare a liquid tea leaf extract. 85 L of the obtained liquid tea leaf extract was mixed with 2.04 kg of a dextrin (TK-16), and the mixture was centrifuged to remove insolubles (tea leaves) and sterilized under the conditions of 90°C for 30 seconds. Then, the mixture was subjected to membrane concentration (NTR-759HG-S4F; produced by Nitto Denko Corporation; liquid temperature: 20°C; pressure: 3 MPa) so as to obtain a concentrated liquid tea leaf extract having a solids concentration in solution of Brix 20 to 35.

### (1-2) Tea leaf distillate

Separately from the aforementioned process, a distillate was prepared from tea leaves. To be specific, 12 kg of commercial *Kabuse-cha* tea leaves were mixed with 12 kg of water, and the mixture was stirred by hand to moisten the tea leaves so as to avoid a bias of the water content in the tea leaves. Next, the tea leaves were put in a basket placed in a steam still, and blow-in type steam distillation was performed at a steam pressure of 0.25 MPa, a steam flow rate of 16 kg/hr, and a steam temperature of 100°C (atmospheric pressure). Then, condensation was carried out at cooling refrigerant temperatures of 4°C for supply and 6°C for return, and at a refrigerant flow rate of 30 L/min., to collect a distillate. The time of distillate collection was set to 30 minutes after the distillate started to distill out. This operation was repeated ten times to obtain a total of 120 kg of distillate (tea aroma composition).

The obtained tea aroma composition was treated with activated carbon by the following procedure: 1.52 g of wood-derived powder activated carbon (Shirasagi WP-Z; produced by Osaka Gas Chemicals Co., Ltd.) with an average pore diameter of 3 nm was added to 78 kg of the above-obtained distillate, and the mixture was stirred with a stirrer for 10 minutes. Then, the activated carbon was removed from the distillate using a filter paper (ADVANTEC, No.2). The treatment temperature used during the activated carbon treatment was set to 5.7°C.

Further, 50 kg of the distillate treated with activated carbon was placed in a still, and the interior of the still was depressurized to -0.09 MPa using a vacuum pump. The depressurized still was heated at a steam flow rate of 15 kg/hr and a steam pressure of 0.25 MPa to raise the temperature of the distillate to 60°C. Then, condensation was carried out at cooling refrigerant temperatures of 4°C for supply and 6°C for return, and at a refrigerant flow rate of 31 L/min., to collect a distillate. The time of distillate collection was set to 15 minutes after the distillate started to distill out. The amount of the distillate collected was 5 kg in total (concentrated to 10-fold). The thus-obtained distillate was used as a tea leaf distillate.

### (1-3) Powder composition

Thirty liters of the liquid tea leaf extract obtained in (1-1) was mixed with 3030 mL of the distillate obtained in (1-2), and then the mixed solution was sterilized under the conditions of 90°C for 45 seconds. The sterilized solution was spray-dried using a spray dryer to prepare a powder composition. The drying conditions adopted were an inlet hot-air temperature of 160°C and an outlet hot-air temperature of 110°C.

### (1-4) Evaluation of powder compositions

The above obtained powder composition was tasted while dissolved in water, and then was felt to have excellent green laver aroma. As a result of analyzing this powder composition, different aroma components were detected, such as dimethyl sulfide, β-ionone, nerolidol, hexanal, 1-penten-3-ol, and (z)-3-hexenol. With the presence of dimethyl sulfide and β-ionone being particularly focused among those aroma components, the concentrations of these two components in this powder composition were measured by following the procedure described below.

### <Calibration curve>

Standard stock solutions (in ethanol solvent) were prepared so as to ensure that each of the aroma components of interest was present at a concentration of 1000 ppm. Each stock solution was diluted with pure water to concentrations of 0.004, 0.02, 0.05, 0.1, 0.2, and 0.5 ppm. 10 mL each of the prepared solutions was transferred into a 20 mL glass vial containing 3 g of sodium chloride, and the thus obtained samples were used for calibration curve plotting.

### <Preparation of an analysis sample>

The powder composition was dissolved in pure water, as appropriate, to give a concentration that fell within the concentration range of the calibration curve, and 10 mL of the diluted solution and 3 g of sodium chloride were placed in a 20 mL glass vial to thereby prepare an analysis sample.

### <Component analysis>

The concentrations of the different aroma components were measured using a gas chromatographic analysis system (Flash GC Nose HERACLES II; produced by Alpha M.O.S. Japan K.K.).

### (Sampling parameters)

| | |
|---|---|
| Incubation: | 60°C for 15 min. |
| Syringe: temperature: | 70°C; cleaning after injection: 90 sec. |
| Headspace injection: (System parameters) | 5000 µL at 250 µL/sec. |
| Column 1: | MXT-5 (slight polarity, 10 m, 180 µm ID, 0.4 µm) |
| Column 2: | MXT-WAX (high polarity, 10 m, 180 µm ID, 0.4 µm) |
| Carrier gas flow rate: | hydrogen 1.6 mL/min. |
| Flame ionization | detector (FID) temperature: 260°C |
| Injector temperature: | 200°C |
| Oven temperature: | 40°C (5 sec.), then raised at 1.5°C/sec. to 250°C (90 sec.) |
| Injection time: | 125 sec. |
| Trap temperature: | 50°C for adsorption, 240°C for desorption |
| Trap time: | 130 sec. for adsorption, 35 sec. for preheating |

As a result of the above measurement, the concentrations of dimethyl sulfide and β-ionone were found to be 83 ppb and 8 ppb, respectively. Additionally, a different powder composition was prepared using commercial *Sencha* tea leaves as a source material to make a liquid tea leaf extract, and was evaluated by the same procedures as mentioned above. As a result, the different powder composition was felt to have a similar excellent green laver aroma, and the concentrations of **dimethyl sulfide and β-ionone** in said powder composition were found to be 54 ppb and 8 ppb, respectively (powder composition B). Further, another different powder composition was prepared using commercial *Sencha* tea leaves as a source material to make a liquid tea leaf extract, and using a dextrin mixture comprising Cluster Dextrin and TK-16 at a ratio of 33:17, and was evaluated by the same procedures as mentioned above. As a result, this powder composition was also felt to have a similar excellent green laver aroma, **and the concentrations of dimethyl sulfide and β-ionone** in said powder composition were found to be 30 ppb and 11 ppb, respectively (powder composition C).

The concentrations of other aroma components were measured under the conditions detailed below.

### <Component analysis>

An analysis sample prepared by the same procedure as mentioned above was loaded into a gas chromatography/mass spectroscopy system (produced by Agilent Technologies) to measure the concentrations of different aroma components by a multi-volatile method (MVM) using a MPS produced by Gestel.
System:

| | |
|---|---|
| GC: | GC7890B, produced by Agilent Technologies |
| MS: | 5977A, produced by Agilent Technologies |
| HS: | MPS, produced by Gestel |
| Tube: | Tenax TA, Carbon bx1000 |
| Column: | HP-INNOWAX, 60 m × 0.25 mm i.d., df = 0.25 µm |
| Temperature conditions: | 40°C (4 min.), then raised at 5°C/min. to 260°C |
| Carrier gas flow rate: | He 1.5 mL/min. |
| Injection method: | Splitless |
| Ion source temperature: | 260°C |

As a result of the above measurement, the concentrations of nerolidol, hexanal, 1-penten-3-ol, and (z)-3-hexenol in the powder composition prepared in (1-3) were found to be 8.8 ppb, 3.7 ppb, 24.0 ppb, and 75.3 ppb, respectively. Also, the concentrations of nerolidol, hexanal, 1-penten-3-ol, **α**-ionone, (z)-3-hexenol, **and β**-cyclocitral in the powder composition B were found to be 4.2 ppb, 3.0 ppb, 61.8 ppb, 9.4 ppb, 9.2 ppb, and 8.0 ppb, respectively. Further, the concentrations of nerolidol, hexanal, 1-penten-3-ol, **α**-ionone, (z)-3-**hexenol, and β**-cyclocitral in the powder composition C were found to be 11.2 ppb, 3.9 ppb, 44.7 ppb, 9.6 ppb, 4.4 ppb, and 7.4 ppb, respectively.

### 2. Study on the ratio of aroma components

Based on the measurement results given above, a focus was placed on the content ratio of **dimethyl sulfide and β**-ionone, and in particular, a study was made on the weight ratio of **β**-ionone **content to dimethyl sulfide content** (**β**-ionone/dimethyl sulfide).

First, a base powdered tea was prepared. To be specific, a tea extraction tank was charged with 12 kg of commercial *Sencha* tea leaves (Yutakamidori) and then with 120 kg of hot water, and the mixture was held at 40°C for 40 minutes to effect extraction of the tea leaves. This extraction treatment was repeated twice to obtain a total of 181 L of liquid tea leaf extract. The obtained liquid tea leaf extract was mixed with 2.03 kg of a dextrin (Pine Oligo 20), 0.18 kg of L-ascorbic acid, and 0.13 kg of sodium bicarbonate, and then, the mixture was subjected to membrane concentration (NTR-759HG-S4F; produced by Nitto Denko Corporation; liquid temperature: 15°C; pressure: 3 MPa) to give a Brix value of 30. After the concentration, Cluster Dextrin was added to a concentration of 2.29 wt.%. Finally, the mixed solution was sterilized under the conditions of 90°C and 30 seconds to prepare a liquid tea leaf extract. The obtained liquid tea leaf extract was spray-dried to give a base powdered tea (powder).

Next, a tea leaf distillate was prepared by following the procedure described in (1-2), and the prepared distillate was additionally treated with activated carbon twice. The activated carbon treatment was performed by the following procedure: the wood-derived powder activated carbon mentioned above was added to the distillate to give a concentration of 100 ppm, and the mixture was stirred for 10 minutes; and after the activated carbon was removed, the same procedure was repeated. The distillate additionally treated with activated carbon was found to have a dimethyl sulfide concentration of 11504 ppb and a **β**-ionone concentration of nearly 0 ppb (below the limit of detection).

Then, 1.2 g of the above obtained powdered tea was added to 200 mL of water to prepare a powdered tea solution with a Brix value of 0.6 (a tea solids Brix value of 0.3). To the powdered tea solution, the distillate additionally treated with activated carbon, and a β-ionone reference standard were added to give such final dimethyl sulfide and β-ionone concentrations as indicated in the table given below, whereby different concentrations of samples were prepared. Since the β-ionone concentration in the reference standard was unknown, concentration measurement of the reference standard had been done by gas chromatography in advance. To be specific, the β-ionone reference standard was diluted with 50 to 5000 times its weight of pure water to adjust its concentration, as appropriate, to lie within the range of the calibration curve, whereby a sample for concentration measurement was prepared. The gas chromatographic analysis was done by following the same procedure as mentioned above.

The different samples prepared were subjected to sensory evaluation by three panelists who were well trained in aroma evaluation. The aroma quality of the samples was evaluated from the viewpoint of a green laver aftertaste felt as a last note, with a sample prepared from a powdered tea solution without addition of the distillate or a β-ionone reference standard being used as a control. The rating was done in a blind fashion in which the composition profiles of the samples were concealed from the panelists. In this sensory evaluation, the green laver aftertaste felt from the samples was rated from one (bad) to five (excellent) points, with half-point increments, and the ratings provided by the panelists were finally averaged. The different samples were rated on the basis of the rating for a sample (control) which was prepared simply by dissolving the powdered tea and was rated 3 points.

**[Table 1]**

| | Amount of powder added (g) | Dimethyl sulfide | | β-ionone | | β-ionone/ dimethyl sulfide | Rating |
|---|---|---|---|---|---|---|---|
| | | Amount of distillate added (µL) | Concentration (ppb) | Amount of standard added (µL) | Concentration (ppb) | | |
| Sample 1-1 | 1.2 | 3500 | 200 | 70 | 1 | 0.005 | 3.9 |
| Sample 1-2 | 1.2 | 3500 | 200 | 300 | 4 | 0.021 | 4.2 |
| Sample 1-3 | 1.2 | 3500 | 200 | 30 | 42 | 0.209 | 4.2 |
| Sample 1-4 | 1.2 | 3500 | 200 | 22 | 31 | 0.153 | 4.3 |
| Sample 1-5 | 1.2 | 3500 | 200 | 26 | 36 | 0.181 | 4.5 |
| Sample 1-6 | 1.2 | 3500 | 200 | 51 | 71 | 0.354 | 4.3 |
| Sample 1-7 | 1.2 | 3500 | 200 | 73 | 102 | 0.507 | 3.8 |
| Sample 1-8 | 1.2 | 3500 | 200 | 100 | 139 | 0.695 | 3.7 |
| Sample 1-9 | 1.2 | 3500 | 200 | 288 | 400 | 2.001 | 3.4 |
| Sample 1-10 | 1.2 | 3500 | 200 | 504 | 700 | 3.502 | 2.8 |

Also, 1.2 g of the above-prepared (base) powdered tea was mixed with 0.8 g of a dextrin mixture (comprising 28.3 wt. parts of Sandek #30, 5 wt. parts of CAVAMAX W6, and 16.7 wt. parts of TK-16) to prepare a powder composition with an increased dextrin content. To the powder composition, 200 mL of water was added to prepare a powdered tea solution with a Brix value of 1.0 (a tea solids Brix of 0.3).

To the obtained powdered tea solution, the aforementioned distillate treated with activated carbon (dimethyl sulfide concentration: 11504 ppb, β-ionone concentration: below the limit of detection) and a β-ionone reference standard were added to give such final concentrations as indicated in the table given below, whereby different concentrations of samples were prepared. The prepared different samples were subjected to sensory evaluation by following the same procedure as described above. In this evaluation, the different samples were rated on the basis of the rating for a sample (control) which was prepared without addition of the distillate or a β-ionone reference standard and was rated 3 points.

**[Table 2]**

| | Amount of powder added (g) | Amount of dextrin added (g) | Dimethyl sulfide | | β-ionone | | β-ionone/ dimethyl sulfide | Rating |
|---|---|---|---|---|---|---|---|---|
| | | | Amount of distillate added (µL) | Concentration (ppb) | Amount of standard added (µL) | Concentration (ppb) | | |
| Sample 2-1 | 1.2 | 0.8 | 3500 | 198 | 15 | 21 | 0.106 | 4.3 |
| Sample 2-2 | 1.2 | 0.8 | 3500 | 198 | 26 | 36 | 0.183 | 4.6 |
| Sample 2-3 | 1.2 | 0.8 | 3500 | 198 | 50 | 70 | 0.352 | 4.6 |
| Sample 2-4 | 1.2 | 0.8 | 3500 | 198 | 100 | 139 | 0.704 | 4.2 |
| Sample 2-5 | 1.2 | 0.8 | 3500 | 198 | 288 | 400 | 2.026 | 3.3 |
| Sample 2-6 | 1.2 | 0.8 | 3500 | 197 | 504 | 700 | 3.546 | 2.8 |

As shown in the above table, it was found that when β-ionone was contained in samples and moreover the weight ratio of β-ionone content to dimethyl sulfide content (β-ionone/dimethyl sulfide) fell within the specified range, excellent green laver aroma was sustained.

## Claims

1. A solid composition comprising dimethyl sulfide and β-ionone, and having a weight ratio of β-ionone content to dimethyl sulfide content of from 0.003 to 3.

2. The composition according to claim 1, wherein the composition is a powder composition.

3. The composition according to claim 1 or 2, comprising two or more types of dextrins.

4. The composition according to claim 3, comprising a linear dextrin and a cyclic dextrin.

5. The composition according to any one of claims 1 to 4, further comprising at least one aroma component selected from the group consisting of α-ionone, β-cyclocitral, (z)-3-hexenol, 1-penten-3-ol, hexanal, and nerolidol.

6. The composition according to any one of claims 1 to 5, comprising a tea leaf extract.

7. The composition according to any one of claims 1 to 6, wherein the tea leaf extract is a *Sencha* tea leaf extract.

8. A beverage or food comprising the composition according to any one of claims 1 to 7.

9. The beverage or food according to claim 8, wherein the beverage or food is a beverage.

10. The beverage or food according to claim 9, wherein the beverage or food is a tea beverage.
